# EUROPÄISCHE PATENTANMELDUNG

(11) **EP 1 000 822 A2**
(43) Veröffentlichungstag der Anmeldung: **17.05.2000**
(21) Anmeldenummer: 00101613.8
(22) Anmeldetag: 07.03.1996
(51) Int. Cl.: B60R 22/28, B60R 22/195, B60R 22/34

(54) **Kraftbegrenzung in einem Insassen-Rückhaltesystem**

(30) Priorität: 29.03.1995 DE 19511457
(62) Teilanmeldung aus: 96103531.8
(71) Anmelder: TRW Occupant Restraint Systems GmbH & Co. KG, 73551 Alfdorf (DE)
(72) Erfinder: Böhmler, Klaus, 73525 Schwäbisch Gmünd (DE)
(74) Vertreter: Degwert, Hartmut, Dipl.-Phys.

(57) **Zusammenfassung**

In einem Rückhaltesystem mit Sicherheitsgurt und aufblasbarem Rückhalteelement wird die durch den Gurt auf den Insassen ausgeübte Rückhaltekraft durch einen Kraftbegrenzer auf einem Niveau begrenzt, das einstellbar ist und an die Körpergröße oder das Gewicht des Fahrzeuginsassen angepaßt werden kann. Die Einstellung des Kraftniveaus erfolgt in solcher Weise, daß in der die Kraft über den Vorverlagerungsweg darstellenden Kennlinie im Bereich einer Wegstrecke, nach deren Durchlaufen der Kontakt zwischen Gurtband und aufgeblasenem Rückhalteelement erwartet wird, die Kennlinie eine abfallende Tendenz aufweist.

## Beschreibung

Die Erfindung betrifft ein Verfahren zur Begrenzung der in einem Insassen-Rückhaltesystem über einen Gurt auf den Insassen ausgeübten Rückhaltekraft sowie einen Kraftbegrenzer, mit dem das Verfahren ausführbar ist.

Im Verlauf des Rückhaltevorganges treten im Gurtband Kraftspitzen auf, durch die das Verletzungsrisiko erhöht wird. Es wurden daher Kraftbegrenzer entwickelt, die im Kraftfluß des Gurtsystems angeordnet werden und Kraftspitzen durch plastische Materialverformung abbauen.

Ein optimaler Schutz des Insassen wird durch kombinierten Einsatz des Sicherheitgurts mit einem aufblasbaren Rückhalteelement (Airbag) erreicht. Bei einem solchen kombinierten Rückhaltesystem kommt es nach einer bestimmten wegstrecke der Vorverlagerung des Insassen zu einer Berührung zwischen dem Gurt und dem aufgeblasenen Rückhalteelement. Es wurde nun gefunden, daß spätestens nach dem Eintreten dieser Berührung die Kennlinie, welche die Kraft über den Vorverlagerungsweg darstellt, eine abfallende Tendenz aufweisen sollte, so daß die vom Gurt aufgebrachte Rückhaltekraft abnimmt.

Bei den herkömmlichen Kraftbegrenzern ist die Kennlinie der Kraft über den Vorverlagerungsweg konstruktiv fest vorgegeben. Je nach Körpergröße und/oder -gewicht des Fahrzeuginsassen wäre aber für ein minimales Verletzungsrisiko ein unterschiedlicher Verlauf dieser Kennlinie erwünscht.

Durch die Erfindung wird ein Verfahren zur Begrenzung der in einem Insassen-Rückhaltesystem über den Gurt auf den Insassen ausgeübten Rückhaltekraft zur Verfügung gestellt, das eine Optimierung der die Kraft über dem Vorverlagerungsweg darstellenden Kennlinie ermöglicht. Gemäß der Erfindung wird von dem Insassen ein Parameter abgeleitet, der repräsentativ für seine Körpergröße und/oder sein Gewicht ist, und das Niveau der Kraftbegrenzung wird in Abhängigkeit von diesem Parameter eingestellt. Für eine geringere Körpergröße oder ein kleineres Gewicht des Insassen wird ein niedrigeres Kraftniveau als für größere oder schwerere Personen eingestellt, so daß unabhängig von den körperlichen Merkmalen des Insassen immer die ganze Vorverlagerungsstrecke des Kraftbegrenzers zur Verfügung steht.

Bei einem Rückhaltesystem, das mit einem aufblasbaren Rückhalteelement kombiniert ist, erfolgt erfindungsgemäß die Einstellung des Kraftniveaus in solcher Weise, daß in der die Kraft über den Vorverlagerungsweg darstellenden Kennlinie im Bereich einer Wegstrecke, nach deren Durchlaufen der Kontakt zwischen Gurtband und aufgeblasenem Rückhaltesystem erwartet wird, die Kennlinie eine abfallende Tendenz aufweist.

Weitere Merkmale und Vorteile der Erfindung ergeben sich aus der folgenden Beschreibung mehrerer Ausführungsformen und aus der Zeichnung, auf die Bezug genommen wird.

In der Zeichnung zeigen:
- Fig. 1: ein Diagramm mit einer die Kraft über der Vorverlagerungsstrecke darstellenden Kennlinie;
- Fig. 2a: eine erste Ausführungsform eines Kraftbegrenzers;
- Fig. 2b: die zugehörige Kennlinie;
- Fig. 3a: eine zweite Ausführungsform eines Kraftbegrenzers;
- Fig. 3b: die zugehörige Kennlinie;
- Fig. 4a: eine dritte Ausführungsform eines Kraftbegrenzers;
- Fig. 4b: die zugehörige Kennlinie;
- Fig. 5a: eine vierte Ausführungsform eines Kraftbegrenzers;
- Fig. 5b: die zugehörige Kennlinie;
- Fig. 6a: schematisch eine Gurtwelle eines Gurtaufrollers mit integriertem Kaftbegrenzer gemäß einer fünften Ausführungsform;
- Fig. 6b: die zugehörige Kennlinie;
- Figuren 6c bis 6f: Einzelheiten dieser Ausführungsform des Kraftbegrenzers.

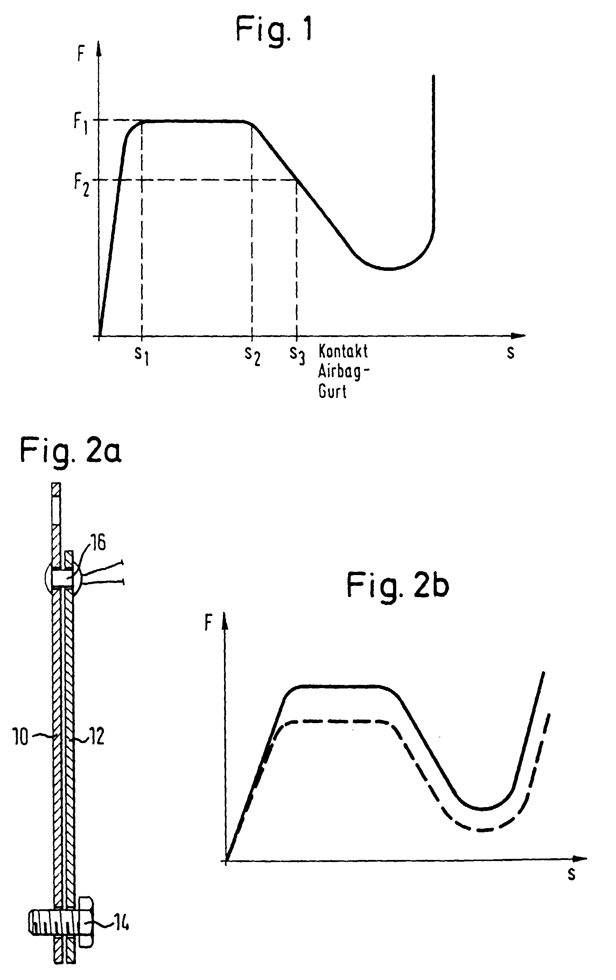

Bei der Vorverlagerung des mit einem Gurt gesicherten Insassen steigt die Gurtkraft F zunächst steil an, wird aber nach einer kurzen Strecke s₁ durch einen mit plastischer Materialverformung arbeitenden Kraftbegrenzer auf einen Wert F₁ begrenzt. Im Idealfall verbleibt die Kraft über eine größere Wegstrecke auf diesem Wert F₁. In einem Rückhaltesystem, das zusätzlich zu dem Gurt ein aufblasbares Rückhalteelement (Airbag) aufweist, trifft nach einer bestimmten Vorverlagerungsstrecke der Gurt auf das aufgeblasene Rückhalteelement. Zu diesem Zeitpunkt, der einer Wegstrecke s₃ im Diagramm der Fig. 1 entspricht, sollte die Kennlinie eine deutlich abfallende Tendenz aufweisen, damit die Summe der Gurtkraft und der Stützkraft durch das aufgeblasene Rückhalteelement keinen zu hohen Wert annimmt. Schon vor Erreichen der Wegstrecke s₃, nämlich bei s₂, geht daher die Kennlinie in einen abfallenden Ast über.

Nun ist aber bei größeren oder schwereren Personen ein höheres Kraftniveau als bei kleineren oder leichteren Insassen erwünscht. Mit bekannten Kraftbegrenzern ist ein solches Verhalten nicht zu erreichen.

Bei der in Fig. 2a gezeigten Ausführungsform eines Kraftbegrenzers sind zwei unter plastischer Materialverformung dehnbare Beschlagteile 10, 12 funktionell parallelgeschaltet, indem sie an einem Ende durch einen Befestigungsbolzen 14 und am gegenüberliegenden Ende durch einen pyrotechnischen Niet 16 zusammengehalten werden. Der pyrotechnische Niet 16 hat einen elektrischen Zünder und kann durch Anlegen eines elektrischen Impulses an zwei Anschlußleitungen gezündet werden. Das Beschlagteil 12 ist dann von dem Beschlagteil 10 abgekoppelt. Die Aktivierung des pyrotechnischen Niets 16 erfolgt bei einem Fahrzeugaufprall in Abhängigkeit vom Gewicht oder der Größe des Fahrzeuginsassen. Bei geringem Gewicht und/oder geringer Größe soll nur das Beschlagteil 10 als Kraftbegrenzer wirksam sein. Es ergibt sich dann in Fig. 2b die gestrichelt gezeigte Kennlinie, die auf einem niedrigeren Niveau liegt als die mit durchgezogener Linie gezeigte Kennlinie, die der Parallelschaltung beider Beschlagteile 10, 12 entspricht.

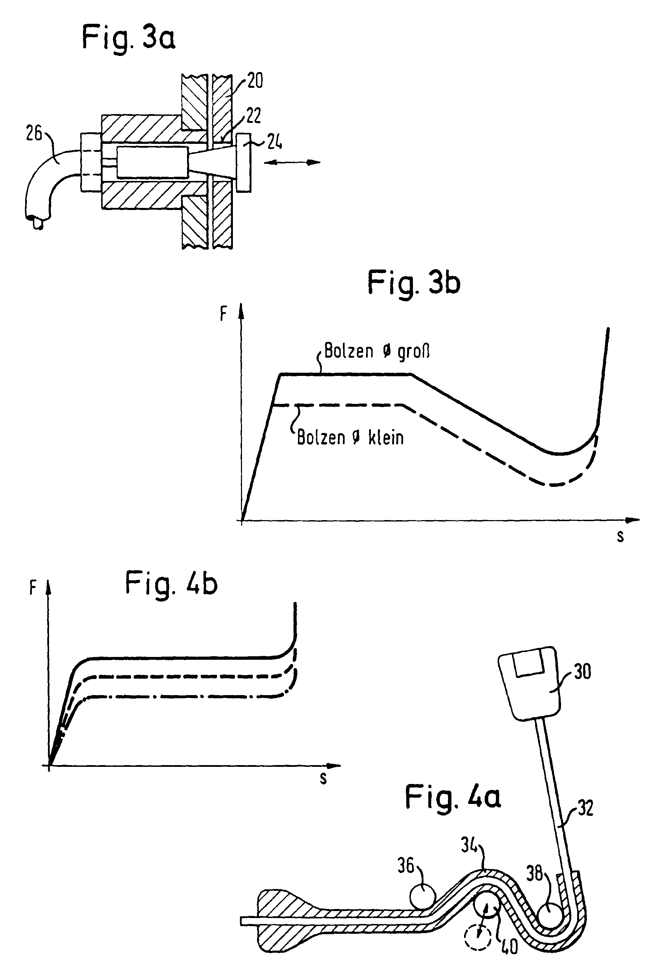

Bei der in Fig. 3 gezeigten Ausführungsform ist ein im Kraftfluß des Gurtsystems liegendes Beschlagteil 20 mit einem Schlitz 22 versehen, in den ein verstellbarer Bolzen 24 eingreift. Der Bolzen 24 hat einen Schaft mit veränderlichem Durchmesser. Bei der gezeigten Ausführungsform ist dieser Schaft kegelig. Durch Verschiebung des Bolzens 24, beispielsweise mittels eines an den Fahrzeugsitz gekoppelten Seilzugs 26, wird der wirksame Außendurchmesser des Bolzens verändert, mit dem dieser in den Schlitz 22 eindringt und das Material des Beschlagteils 20 plastisch verformt. Fig. 3b zeigt schematisch zwei auf diese Weise erreichbare Kennlinien.

Bei der in Fig. 4a gezeigten Ausführungsform ist ein Gurtschloß 30 mittels eines Seils 32, das eine Ummantelung 34 aus Aluminium aufweist, am Fahrzeugaufbau verankert. Die Ummantelung 34 wird bogenförmig durch drei Bolzen 36, 38, 40 umgelenkt. Die Bolzen 36, 38 sind starr am Fahrzeugaufbau befestigt; der Bolzen 40 ist einstellbar, so daß er eine mehr oder weniger starke Krümmung des umgelenkten Teils der Ummantelung 34 verursacht. Die Verstellung des Bolzens 40 kann auch bei dieser Ausführungsform synchron mit der Sitzverstellung erfolgen. Je nach Stellung des Bolzens 40 ergibt sich eine der in Fig. 4b skizzierten Kennlinien.

Bei der Ausführungsform nach Fig. 5a ist ein Gurtschloß 50 über ein Zugseil 52 an den Kolben 54 einer Kolben/Zylinder-Einheit angeschlossen, deren Zylinder 56 an einen pyrotechnischen Gasgenerator 58 angeschlossen ist. Der Kolben 54 weist einen kegelförmigen Abschnitt auf, auf dem zwei Wälzkörper 60, 62 abgestützt sind, die innen an der Wandung des Zylinders 56 angreifen. Fig. 5a zeigt die Kolben/Zylinder-Einheit nach Aktivierung des Gasgenerators 58 zur Straffung des Gurtbandes. Ausgehend von dieser Stellung kann eine Rückbewegung des Kolbens 54 nur erfolgen, wenn die Zylinderwandung durch die Wälzkörper 60, 62 plastisch verformt wird.

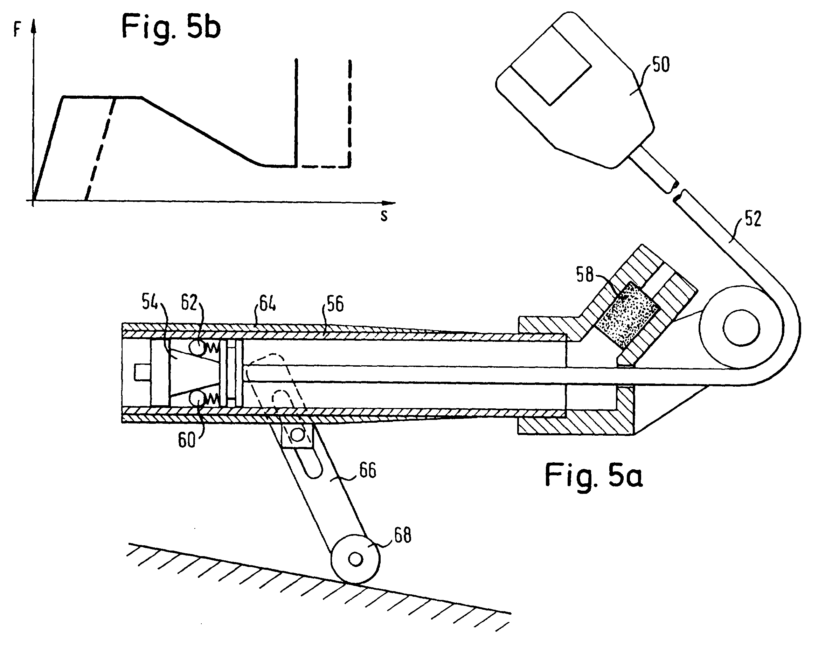

Der Verformungswiderstand der Zylinderwandung wird durch eine aufgeschobene Hülse 64 variabler Wandstärke verändert. An der Hülse 64 greift ein zweiarmiger Hebel 66 an, der schwenkbar gelagert ist und an seinem von der Hülse 64 abgewandten Ende eine Rolle 68 trägt, die auf einer Rampe am Fahrzeugboden abgestützt ist. Da die in Fig. 5a gezeigte Kolben/Zylinder-Einheit mit dem Gurtschloß 50 an einem Fahrzeugsitz montiert ist, wird die gesamte Anordnung bei Verschiebung des Fahrzeugsitzes mitbewegt, wodurch die Neigung des Hebels 66 verändert und folglich die Längsposition der Hülse 64 auf der Zylinderwandung verändert wird. Fig. 5b zeigt beispielshalber zwei aus der Verstellung der Hülse 64 resultierende Kennlinien.

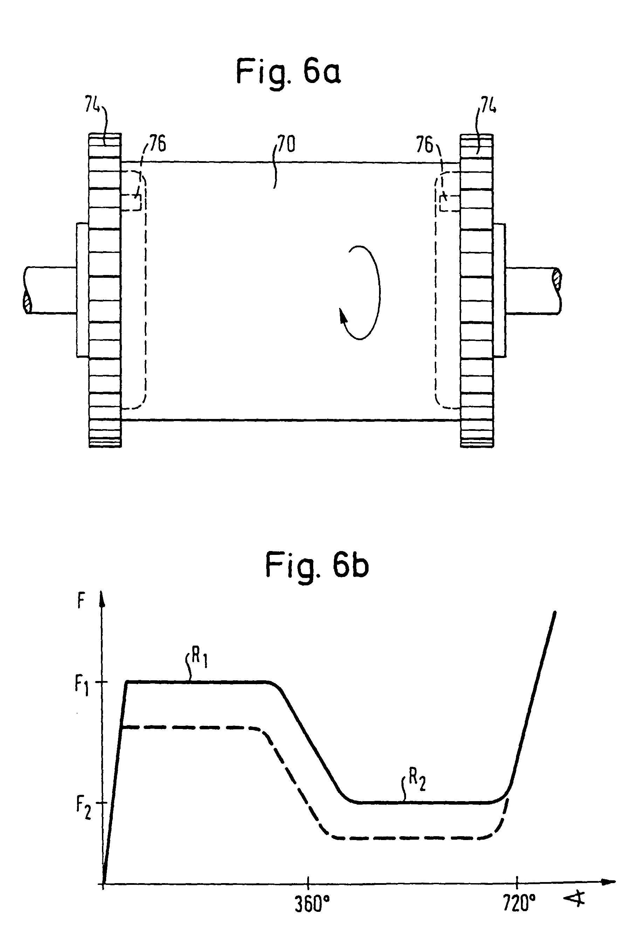

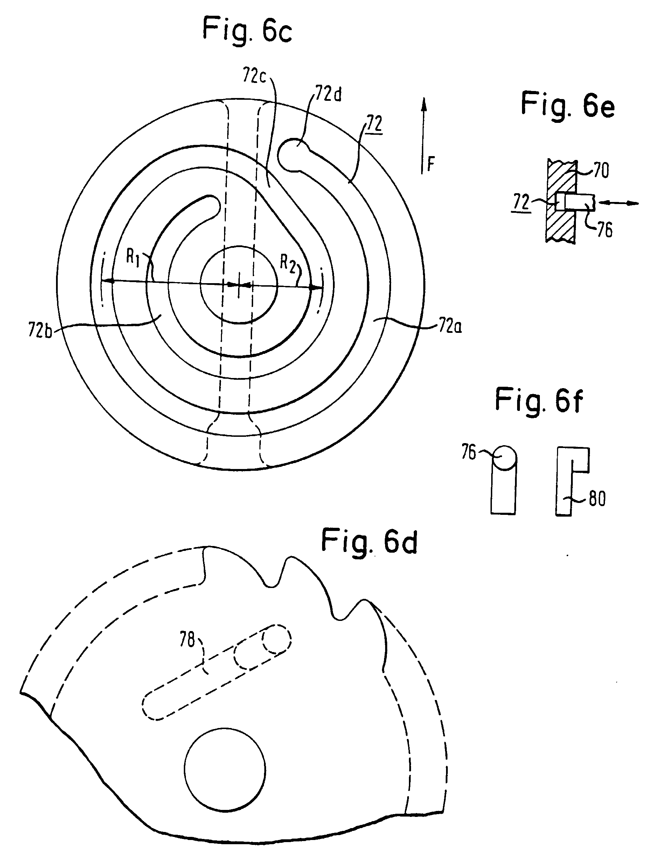

Bei der Ausführungsform nach Fig. 6 ist die Gurtwelle 70 eines Gurtaufrollers an ihren beiden Stirnflächen mit einer ausgesparten, gewundenen Nut 72 versehen. Zwei auf die Stirnflächen der Gurtwelle 70 aufgesetzte Sperrzahnräder 74 sind jeweils durch einen Bolzen 76, der einerseits in die Nut 72 eingreift und andererseits in einer schrägen Nut 78 an der Innenseite der Sperrzahnräder 74 verschiebbar geführt ist, mit der Gurtwelle 70 gekoppelt. Die Nut 72 weist einen äußeren, teilkreisförmigen Abschnitt 72a, einen inneren, ebenfalls teilskreisförmigen Abschnitt 72b und einen Zwischenabschnitt 72c auf, der die Abschnitte 72a und 72b miteinander verbindet. Die Bolzen 76 befinden sich im Ausgangszustand am äußeren Ende 72d der Nut 72.

Bei Blockierung des Gurtaufrollers werden die Sperrzahnräder 74 am Gehäuse des Aufrollers drehfest gehalten. Wenn über das Gurtband ein hohes Drehmoment auf die Gurtwelle 70 ausgeübt wird, dreht sich die Gurtwelle 70 relativ zu den Sperrzahnrädern 74, wobei die Bolzen 76 in der Nut 72 vordringen und die seitlichen Wände der Nut 72 plastisch verformt werden, da der Bolzen 76 breiter ist als die Nut 72. Auf dem äußeren Abschnitt 72a der Nut ergibt sich ein Radius R₁, der zu dem weitgehend konstanten Kraftniveau F₁ im Diagramm der Fig. 6b führt. Nach annähernd einer vollständigen Umdrehung der Gurtwelle 70 treten die Bolzen 76 jeweils in den Zwischenabschnitt 72c der Nut 72 ein, so daß sich nun wegen des progressiv größer werdenden wirksamen Hebelarms, mit dem die Kraft F am Umfang der Gurtwelle 70 angreift, ein abfallender Ast der Kennlinie in Fig. 6b ergibt. Die Einwärtsbewegung der Bolzen 76 wird durch die radiale Komponente der Nut 78 ermöglicht. Sobald der innere Abschnitt 72b der Nut 72 mit dem Radius R₂ erreicht ist, erfolgt eine Kraftbegrenzung auf einem niedrigeren Niveau F₂ in der Kennlinie gemäß Fig. 6b.

In Fig. 6e ist schematisch veranschaulicht, daß die Eindringtiefe der Bolzen 76 in die Nut 72 einstellbar ist. Die Einstellung kann beispielsweise in Abhängigkeit von der Höhe des auf der Gurtwelle 70 verbliebenen Gurtbandwickels erfolgen, da dieses Maß indirekt über die Größe des Fahrzeuginsassen Aufschluß ergibt. Je nach Eindringtiefe der Bolzen 76 in die Nut 72 ergeben sich größere oder kleinere Werte der Kräfte F₁ und F₂, wie in Fig. 6b durch eine gestrichelte Kennlinie veranschaulicht ist.

Wie schließlich aus Fig. 6f ersichtlich ist, sind die Bolzen 76 mit einer abgewinkelten länglichen Führungskufe 80 versehen, die eine sichere Abstützung der Bolzen gewährleisten.

## Patentansprüche

1. Verfahren zur Begrenzung der in einem Insassen-Rückhaltesystem über einen Gurt auf den Insassen ausgeübten Rückhaltekraft, dadurch gekennzeichnet, daß von dem Insassen ein Parameter abgeleitet wird, der repräsentativ für seine Körpergröße oder sein Gewicht ist, und das Niveau der Kraftbegrenzung in Abhängigkeit von diesem Parameter eingestellt wird.

2. Verfahren nach Anspruch 1, dadurch gekennzeichnet, daß in einem mit einem aufblasbaren Rückhalteelement kombinierten Rückhaltesystem die Einstellung des Kraftniveaus so erfolgt, daß in der die Kraft über den Vorverlagerungsweg darstellenden Kennlinie im Bereich einer Wegstrecke, nach deren Durchlaufen der Kontakt zwischen Gurtband und aufgeblasenem Rückhalteelement erwartet wird, die Kennlinie eine abfallende Tendenz aufweist.

3. Verfahren nach Anspruch 1, dadurch gekennzeichnet, daß die Einstellung des Kraftniveaus durch Variation der Stärke einer plastischen Materialverformung erfolgt.

4. Kraftbegrenzer zur Begrenzung der in einem Insassen-Rückhaltesystem über einen Gurt auf den Insassen ausgeübten Rückhaltekraft durch plastische Materialverformung, dadurch gekennzeichnet, daß die Stärke der plastischen Materialverformung in Abhängigkeit von einem Parameter, der für die Körpergröße oder das Gewicht des Insassen repräsentativ ist, veränderlich ist.

5. Kraftbegrenzer nach Anspruch 4, dadurch gekennzeichnet, daß von mehreren parallel im Kraftfluß des Gurtsystems liegenden plastisch verformbaren Beschlagteilen (10, 12) wenigstens eines (12) in Abhängigkeit von dem Parameter abtrennbar ist.

6. Kraftbegrenzer nach Anspruch 4, dadurch gekennzeichnet, daß im Kraftfluß des Gurtsystems zwei relativ zueinander verschiebbare Beschlagteile angeordnet sind, von denen das eine (20) mit einem Schlitz (22) und das andere mit einem in den Schlitz eingreifenden Deformationskörper (24) versehen ist, der ein variables Querschnittsmaß aufweist und dessen Eindringtiefe in den Schlitz (22) einstellbar ist.

7. Kraftbegrenzer nach Anspruch 4, dadurch gekennzeichnet, daß im Kraftfluß des Gurtsystems zwei relativ zueinander verschiebbare Beschlagteile angeordnet sind, von denen das eine mit einer Nut und das andere mit einem in den Schlitz eingreifenden Bolzen versehen ist, dessen Eindringtiefe in die Nut einstellbar ist.

8. Kraftbegrenzer nach Anspruch 4, dadurch gekennzeichnet, daß im Kraftfluß des Gurtsystems ein langgestrecktes Beschlagteil (32) angeordnet ist, das über wenigstens ein Umlenkglied (40) zwangsgeführt ist, dessen Umlenkradius einstellbar ist.
